# EUROPEAN PATENT APPLICATION

(11) **EP 2 336 725 A1**
(43) Date of publication of application: **22.06.2011**
(21) Application number: 10170062.3
(22) Date of filing: 20.07.2010
(51) Int. Cl.: G01C 21/36

(54) **Electronic system applied to a means for transport and related control method**

(30) Priority: 23.11.2009 TW 098139761
(71) Applicant: HTC Corporation, Taoyuan County 330 (TW)
(72) Inventor: Chen, Yi-Hsuan, Taoyuan City, Jaoyuan Country (TW); Cheng, Shih-Wei, Taoyuan City, Taoyuan Country (TW)
(74) Representative: 2K Patentanwälte Blasberg Kewitz & Reichel

(57) **Abstract**

An electronic system (10) includes a portable device (200), a display device (110), an input device (120, 130), and a control device (150), wherein the display device (110), the input device (120, 130) and the control device (150) are disposed in a transport (200). The input device (120, 130) is used for receiving an input signal. The control device (150) is used for communicating with the display device (110), the input device (120, 130), and the portable device (200). When the portable device (200) is coupled to the transport (100), the portable device (200) switches to a specific operating mode from a normal operating mode; and when the portable device (200) switches to the specific operating mode, the electronic system (10) makes use of the input device (120, 130) to control the portable device (200) or the electronic system (10) makes use of the portable device (200) to control the input device (120,130). Herein the transport (100) may be a motor vehicle, and the control device (150) may be an on board unit.

## Description

### Field of the Invention

This invention relates to an electronic system applied to a transport and a related control method capable of making use of an input device (e.g., a touch display) of the transport (e.g., a motor vehicle) to control the portable device or making use of the portable device to control the input device of the transport according to the pre-characterizing clauses of claims 1 and 13.

Recently, the subject of car PCs has become popular with the increase in requirements for car equipment. The car is no longer merely a vehicle and is a digital entertainment center. For example, GPS navigation systems, reverse gear cameras, in-car digital TVs or DVD players, Internet browsers, phone calls, etc. have already become fundamental car equipments in present day vehicles.

Hence, how to provide a car PC with low cost, high efficiency, and application diversification in order to satisfy various requirements of consumers have become an important topic of designing the car PC. However, if the car PC is equipped with all of the abovementioned features so as to satisfy various requirements of the consumers, its manufacturing cost must be greatly increased. In addition, the car PC must update quickly in order to keep up with trends, but this is almost impossible for the automobile manufactures and the consumers. In contrast, today almost everyone seems to have a smart phone or a PDA phone, and the upgrade speed of the smart phone or the PDA phone is much quicker than the upgrade speed of the car PC. If the features provided by the smart phone or the PDA phone can be incorporated into the vehicle for its use, it can bring more convenience to the automobile manufactures and the consumers.

This in mind, the invention aims at providing an electronic system to solve the abovementioned problems.

This is achieved by an electronic system applied to a transport and a related control method, according to claims 1 and 13, respectively.

The dependent claims pertain to corresponding further developments and improvements.

As will be seen more clearly from the detailed description below, an embodiment of the electronic system applied to a transport further comprises a portable device, a display device, an input device, and a control device. The display device is disposed in the transport, for displaying images. The input device is disposed in the transport, for receiving an input signal. The control device is disposed in the transport and coupled to the display device, the input device, as well as the portable device, wherein the control device is used for communicating with the display device, the input device, and the portable device. When the portable device is coupled to the transport, the portable device switches to a specific operating mode from a normal operating mode; and when the portable device switches to the specific operating mode, the electronic system makes use of the input device of the transport to control the portable device or the electronic system makes use of the portable device to control the input device. The transport may be a motor vehicle, and the control device may be an on board unit.

Another embodiment of the electronic system applied to a transport comprises a portable device, a touch display, and a control device. The touch display is disposed in the transport, for displaying images and for receiving a touch input signal. The control device is disposed in the transport and coupled to the touch display as well as the portable device, wherein the control device is used for communicating with the touch display device and the portable device. When the portable device is coupled to the transport, the portable device switches to a specific operating mode from a normal operating mode; and when the portable device switches to the specific operating mode, the electronic system makes use of the touch display of the transport to control the portable device or the electronic system makes use of the portable device to control the touch display.

According to another embodiment, a method for controlling an electronic system applied to a transport is provided. The electronic system comprises a portable device, a display device, an input device, and a control device, wherein the display device, the input device, and the control device are disposed in the transport. As will be seen more clearly from the detailed description below, the method comprises the steps of: when the portable device is coupled to the transport, controlling the portable device to switch to a specific operating mode from a normal operating mode; when the portable device switches to the specific operating mode, making use of the input device of the transport to control the portable device, or making use of the portable device to control the input device; and making use of the control device to communicate with the display device, the input device, and the portable device. The input signal may be a touch input signal or a voice input signal.

In the following, the invention is further illustrated by way of example, taking reference to the following drawings. Thereof:
- FIG.1 and FIG.2: are appearance dimensional drawings showing an electronic system applied to a transport according to an embodiment of the present invention;
- FIG.3A and FIG.3B: are diagrams showing an exemplary implementation of the cradle of the transport shown in FIG.1;
- FIG.4: is a block diagram of an electronic system applied to a transport according to a first exemplary embodiment of the present invention;
- FIG.5: is a block diagram of an electronic system applied to a transport according to a second exemplary embodiment of the present invention;
- FIG.6: is a diagram illustrating an example of a multi-screen being displayed in the display device/touch display of the transport;
- FIG.7: is a diagram illustrating another example of a multiscreen being displayed in the display device/touch display of the transport;
- FIG.8: is a flowchart illustrating a method for controlling an electronic system applied to a transport according to an exemplary embodiment of the present invention; and
- FIG.9: is a flowchart illustrating detailed steps of the steps 824 and 826 shown in FIG.8 according to an exemplary embodiment.

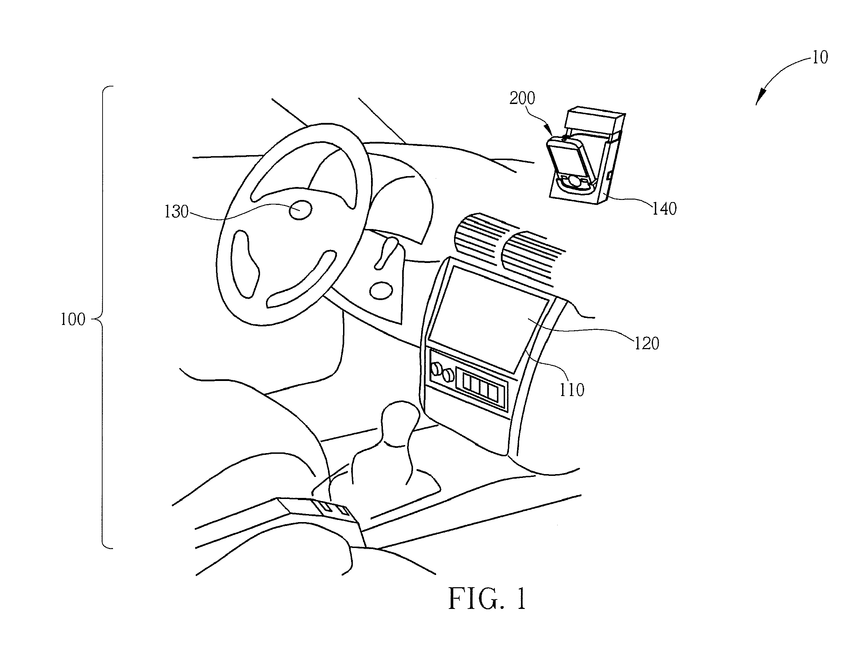

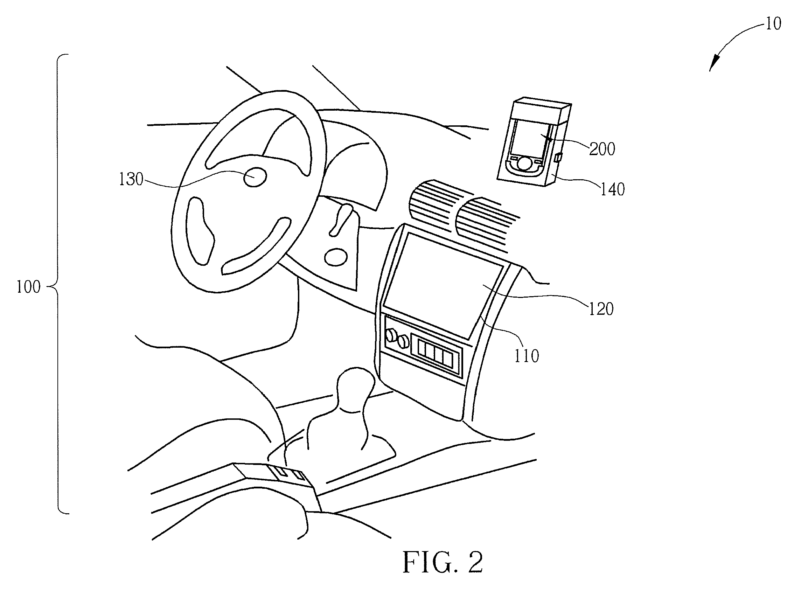

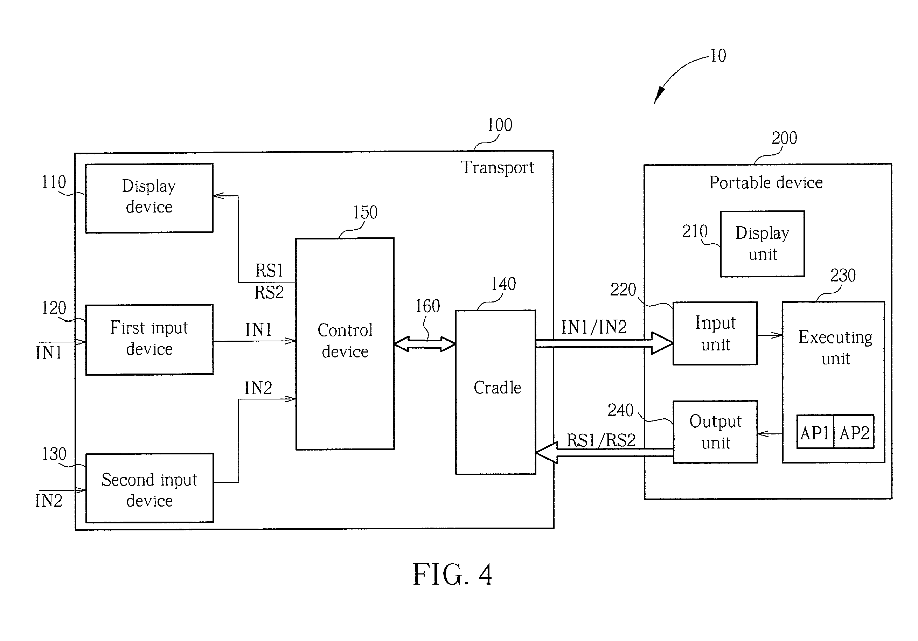

Please refer to FIG.1 together with FIG.2 and FIG.4, wherein FIG.1 and FIG.2 are appearance dimensional drawings of an electronic system 10 applied to a transport 100 according to an embodiment of the present invention, and FIG.4 is a block diagram of the electronic system 10 shown in FIG.1 and FIG.2 according to a first exemplary embodiment of the present invention. As shown in FIG.1 and FIG.2, the electronic system 10 includes, but is not limited to, a portable device 200, a display device 110, a first input device 120, a second input device 130 and a cradle 140. The display device 110, the first input device 120, the second input device 130, and the cradle 140 are all disposed in the transport 100. In this embodiment, the transport 100 may be a motor vehicle, but this should not be considered as a limitation of the present invention.

Be noted that FIG.1 represents a condition that the portable device 200 has not been coupled to the transport 100 yet, that is, the portable device 200 is not placed in the cradle 140. At this time, the portable device 200 is under a normal operating mode. FIG.2 represents another condition that the portable device 200 has already been coupled to the transport 100, that is, the portable device 200 is placed in the cradle 140. At this time, the portable device 200 switches to a specific operating mode from the normal operating mode. What calls for special attention is that when the portable device 200 switches to the specific operating mode, the electronic system 10 is able to make use of the first input device 120 and/or the second input device 130 of the transport 100 to control the portable device 200, or the electronic system 10 is able to make use of the portable device 200 to control the first input device 120 and/or the second input device 130. In this embodiment, the first input device 120 may be a touch input device, which is used for receiving a touch input signal (e.g., IN1); and the second input device 130 may be a voice input device, which is used for receiving a voice input signal (e.g., IN2). Be noted that the first input device 120 and the second input device 130 as mentioned in this embodiment are presented merely for describing the present invention, and those skilled in the art should appreciate that the type and the amount of the input devices of the transport 100 are not limited.

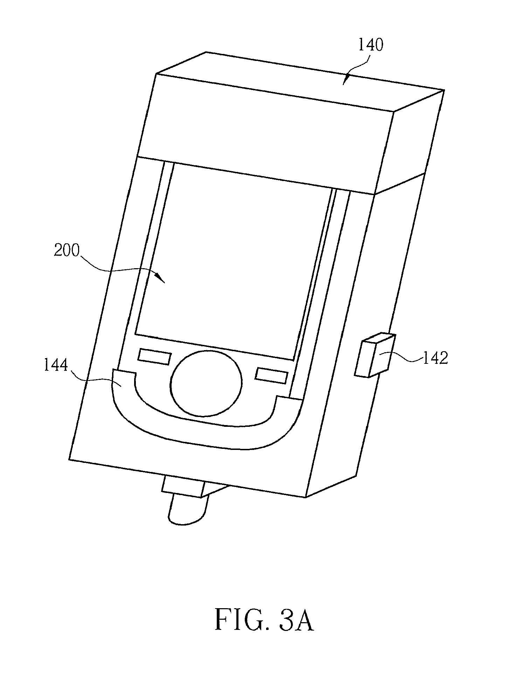

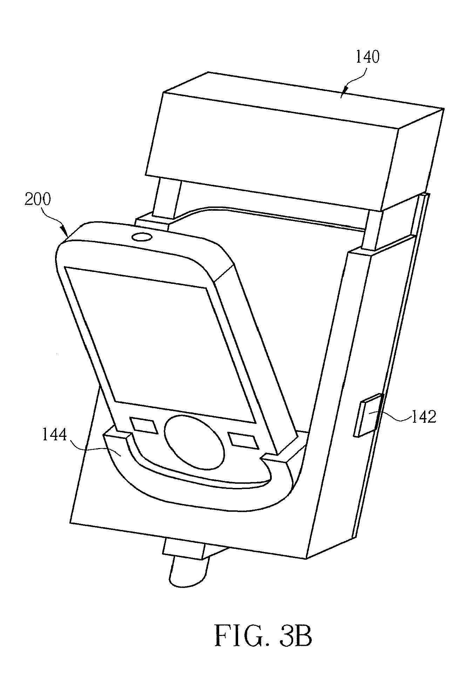

Please refer to FIG.3A together with FIG.3B. FIG.3A and FIG.3B are diagrams showing an exemplary implementation of the cradle 140 of the transport 100 shown in FIG.1. Herein FIG.3A represents a condition that the portable device 200 is placed in the cradle 140 (which is the same as the condition shown in FIG.2); at this time, the portable device 200 switches to the specific operating mode from the normal operating mode. FIG.3B represents another condition that the portable device 200 is taken out from the cradle 140 (which is the same as the condition shown in FIG.1); at this time, the portable device 200 switches back to the normal operating mode from the specific operating mode. As FIG.3A and FIG.3B depict, the cradle 140 includes a button 142, and the portable device 200 is taken out from the cradle 140 by pressing the button 142 of the cradle 140. Moreover, the cradle 140 further includes a connector 144, and the connector 144 has a plurality of (e.g., 10) pins (not shown). Be noted that when the portable device 200 is placed in the cradle 140, the cradle 140 charges the portable device 200 via the plurality of pins and electronically connects the transport 100 with the portable device 200.

From FIG.4, we can see that the electronic system 10 includes a transport 100 and a portable device 200. In this embodiment, the transport 100 includes a display device 110, a first input device 120, a second input device 130, a cradle 140, a control device 150, and a transmission interface 160. The cradle 140 is disposed in the transport 100, for fixing the portable device 200 (as is also shown in FIG.2 and FIG.3A) and for charging the portable device 200. The display device 110 is used for displaying images, such as the first executing result RS1 and/or the second executing result RS2. In addition, the first input device 120 receives a first input signal IN1, and the second input device 130 receives a second input signal IN2. The control device 150 (e.g., an on board unit, OBU) is coupled to the display device 110, the first input device 120, the second input device 130, as well as the cradle 140, wherein the control device 150 communicates with the display device 110, the first input device 120, the second input device 130 and the portable device 200. As an illustration, the control device 150 and the portable device 200 communicate with each other via the transmission interface 160. Be noted that the transmission interface 160 may be a wireless transmission interface or a wired transmission interface, which should also belong to the scope of the present invention.

Please keep referring to FIG.4. The portable device 200 includes, but is not limited to, a display unit 210, an input unit 220, an executing unit 230, and an output unit 240. The display unit 210 is used for displaying images, and can be implemented by a touch panel or a LCD panel, but in no way should be considered as limitations of the present invention. The input unit 220 receives the first input signal IN1 from the first input device 120 and/or the second input signal IN2 from the second input device 130. Furthermore, the executing unit 230 is coupled to the input unit 220 for executing a corresponding first designated application AP1/a corresponding second designated application AP2 according to the first touch input signal IN1/ the second touch input signal IN2, and for generating a corresponding first executing result RS1/ a corresponding second executing result RS2 of the first designated application AP1/ the second designated application AP2. The output unit 240 is coupled to the executing unit 230 for outputting the corresponding first executing result RS1/ the corresponding second executing result RS2 of the first designated application AP1/ the second designated application AP2 to the control device 150 of the transport 100. After that, the control device 150 controls the display device 110 to display the corresponding first executing result RS1/ the corresponding second executing result RS2 of the first designated application AP1/ the second designated application AP2.

Please note that the abovementioned portable device 200 may be a cell phone, a personal digital assistant (PDA), a PDA phone, a smart phone, or a laptop. But the present invention is not limited to this only, and it can be a portable device of other types. In addition, the abovementioned first designated application AP1/second designated application AP2 can be navigation, playback of video files, playback of music files, establishments of call connections, network access, or provision of transport operating information (such as car information). However, those skilled in the art should appreciate that various modifications of the first designated application AP1 and the second designated application AP2 may be made, which can be designed depending on actual demands.

In short, when the portable device 200 has not been coupled to the transport 100 yet, the portable device 200 is under the normal operating mode; and when the portable device 200 is coupled to the transport 100, the portable device 200 switches to the specific operating mode from the normal operating mode. Therefore, when the portable device 200 switches to the specific operation mode, the consumer is able to make use of the first input device 120 (e.g., a touch input device) and/or the second input device 130 (e.g., a voice input device) of the transport 100 to control the portable device 200, and then utilize the designated application (such as, navigation, playback of video files, establishments of call connections, or network access) provided by the portable device 200. Additionally, when the portable device 200 switches to the specific operating mode, the consumer is able to make use of the portable device 200 to control the first input device 120 and/or the second input device 130. After that, the display device 110 of the transport 100 can be used for displaying the corresponding first executing result RS1/ the corresponding executing result RS2 of the first designated application AP1/ the second designated application AP2. As a result, by making uses of the designated applications provided by the portable device 200, the architecture of the control device 150 (such as, an on board unit) disposed in the transport 100 can be simplified or some features can be replaced, such that only a simple architecture is required to implement the control device 150.

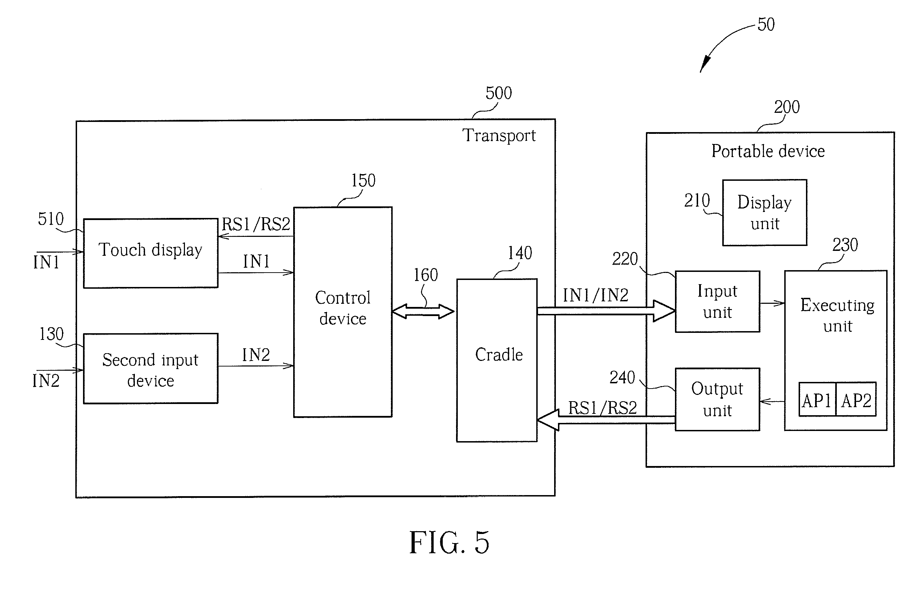

Please refer to FIG.5. FIG.5 is a block diagram of an electronic system 50 applied to a transport 500 according to a second exemplary embodiment of the present invention. As FIG.5 depicts, the electronic system 50 includes a transport 500 and a portable device 200. In this embodiment, the transport 500 includes a touch display 510, a second input device 130 (e.g., a voice input device), a cradle 140, a control device 150, and a transmission interface 160. What calls for special attention is that the touch display 510 is used for displaying image and receiving a first input signal IN1 (such as a touch input signal). In other words, in this embodiment, the touch display 510 is used for implementing the display device 110 as well as the first input device 120 shown in FIG.4, and the touch display 510 is equipped with all the features of them. However, the display device 110 and the first input device 120 are two separate devices in FIG.4. As an illustration, the display device 110 may be an LCD panel, and the first input device 120 may be a touch panel.

Following the aforementioned embodiments, when the portable device 200 has not been coupled to the transport 500, the portable device 200 lies under a normal operating mode; and when the portable device 200 is coupled to the transport 500, the portable device 200 switches to a specific operating mode from the normal operating mode. Please note that when the portable device 200 switches to the specific operating mode, the electronic system 50 is able to make use of the touch display 510 to control the portable device 200, or the electronic system 50 is able to make use of the portable device 200 to control the touch display 510. Moreover, operations related to the second input device 130, the cradle 140, the control device 150, the transmission interface of the transport 500 as well as the display unit 210, the input unit 220, the executing unit 230, and the output unit 240 of the portable device 200 have been detailed as above (referring to FIG.4), and further description is therefore omitted here for brevity.

In the following descriptions, several examples are cited for illustrating how the electronic system 10 displays a multi-screen on the display device 110 of the transport 100 or how the electronic system 50 displays a multi-screen on the touch display 510 of the transport 500. Assume that the consumer desires to activate the first designated application AP1 (e.g., navigation) of the portable device 200 via the first input device 110 (or the touch display 510), and desires to activate the second designated application AP2 (e.g., provision of car information) of the portable device 200 via the second input device 130 (e.g., a voice input device).

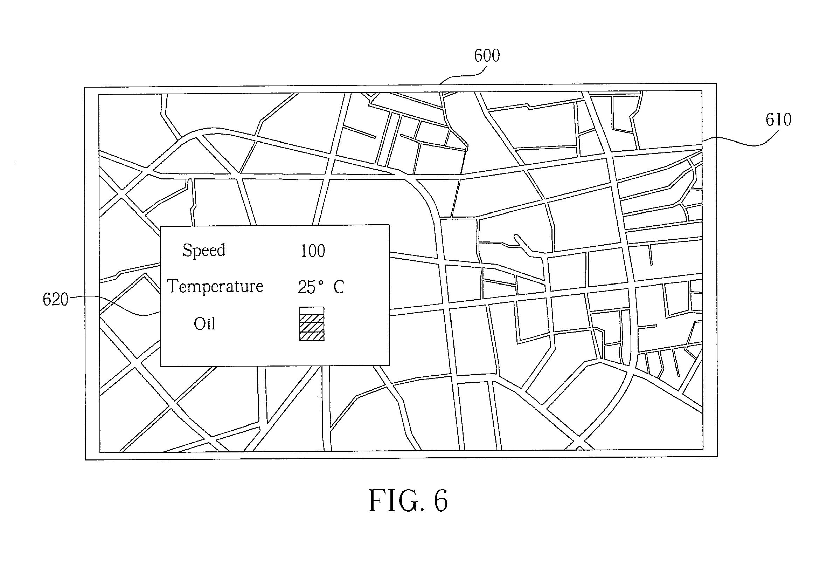

Please refer to FIG.6. FIG.6 6 is a diagram illustrating an example of a multi-screen being displayed in the display device 110/touch display 510 of the transport. From FIG.6, we can see that the multi-screen 600 displayed in the display device 110/touch display 510 includes a corresponding first executing result 610 of the first designated application API (e.g., navigation) as well as a corresponding second executing result 620 of the second designated application AP2 (e.g., provision of car information).

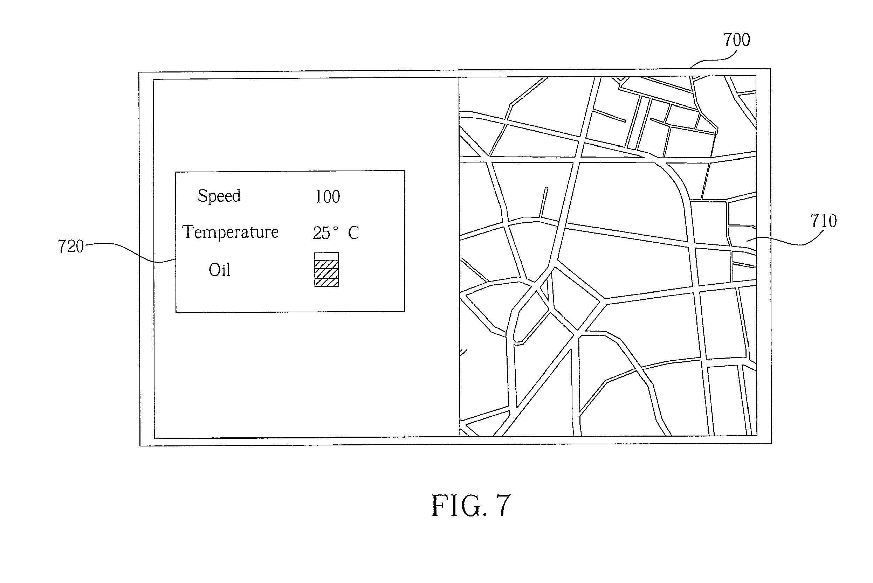

Please refer to FIG.7. FIG.7 is a diagram illustrating another example of a multi-screen being displayed in the display device 110/touch display 510 of the transport. From FIG.7, we can see that the multi-screen 700 displayed in the display device 110/touch display 510 includes a corresponding first executing result 710 of the first designated application AP1 (e.g., navigation) as well as a corresponding second executing result 720 of the second designated application AP2 (e.g., provision of car information).

Please note that in the embodiment shown in FIG.6, the first executing result 610 as well as the second executing result 620 are displayed as a picture in picture (PIP). In the embodiment shown in FIG.7, the first executing result 710 as well as the second executing result 720 are displayed as a split screen. This is not meant to be limitations of the present invention. As one skilled in the art will readily appreciate that various modifications of the multi-screen being displayed in the display device 110 of the transport 100 or in the touch display 510 of the transport 500 may be made, and this also belongs to the scope of the present invention. Furthermore, the screen displayed by the display device 110 of the transport 100 or the touch display 510 of the transport 500 is not limited to be the same as the screen displayed by the display unit 210 of the portable device 200. That is to say, their screens can be the same or can be different, and this should not be considered as limitations of the present invention.

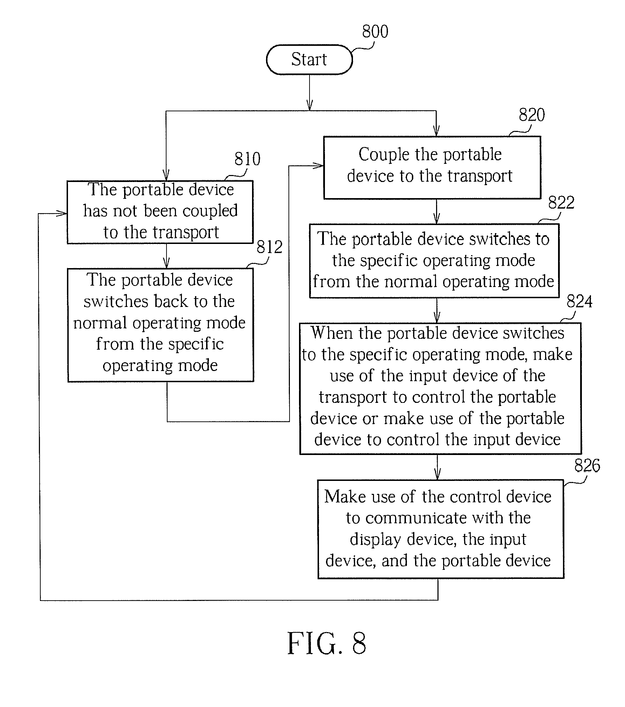

Please refer to FIG.8. FIG.8 is a flowchart illustrating a method for controlling an electronic system applied to a transport according to an exemplary embodiment of the present invention. The electronic system is applied to a transport (e.g., 100 and 500), and the electronic system has a portable device, a display device, an input device as well as a control device, wherein the display device, the input device as well as the control device are disposed inside the transport. Please note that the following steps are not limited to be performed according to the exact sequence shown in FIG.8 if a roughly identical result can be obtained. The method includes the following steps:
- Step 800:: Start.
- Step 810:: The portable device has not been coupled to the transport.
- Step 812:: When the portable device has not been coupled to the transport yet, the portable device switches back to the normal operating mode from the specific operating mode. When the portable device is coupled to the transport, go to the Step 820.
- Step 820:: Couple the portable device to the transport.
- Step 822:: When the portable device is coupled to the transport, the portable device switches to the specific operating mode from the normal operating mode.
- Step 824:: When the portable device switches to the specific operating mode, make use of the input device of the transport to control the portable device or make use of the portable device to control the input device.
- Step 826:: Make use of the control device to communicate with the display device, the input device, and the portable device. When the portable device is taken out from the transport, go to the Step 810.

How each element operates can be known by collocating the steps shown in FIG.8 together with the elements shown in FIG.1, FIG.2 and FIG.4 (or FIG.5), and further description is omitted here for brevity. Be noted that the steps 810-812 represent the condition illustrated in FIG.l and FIG.3B (i.e., the condition that the portable device has not been coupled to the transport yet), while the steps 820-826 represent the condition illustrated in FIG.2 and FIG.3A (i.e., the condition that the portable device is coupled to the transport).

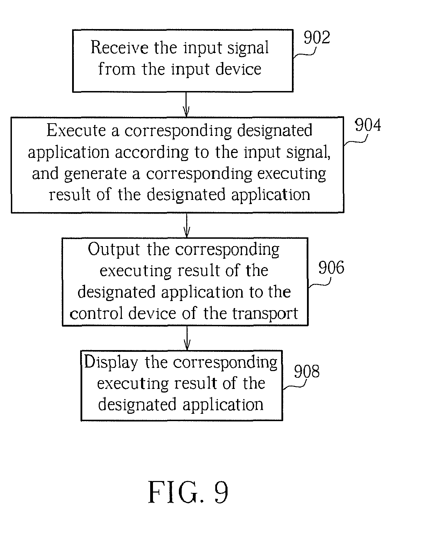

Please note that, the steps of the abovementioned flowchart are merely a practicable embodiment of the present invention, and in no way should be considered to be limitations of the scope of the present invention. The method can include other intermediate steps or several steps can be merged into a single step without departing from the spirit of the present invention. As an illustration, the steps 824 and 826 shown in FIG.8 can further include several detailed steps. Please refer to FIG.8 together with FIG.9. FIG.9 is a flowchart illustrating detailed steps of the steps 824 and 826 shown in FIG.8 according to an exemplary embodiment, and it includes, but is not limited to, the following detailed steps:
- Step 902:: Receive the input signal from the input device.
- Step 904:: Execute a corresponding designated application according to the input signal, and generate a corresponding executing result of the designated application.
- Step 906:: Output the corresponding executing result of the designated application to the control device of the transport.
- Step 908:: Display the corresponding executing result of the designated application.

How each element operates can be known by collocating the steps shown in FIG.9 together with the elements shown in FIG.l, FIG.2 and FIG.4 (or Fig.5), and further description is omitted here for brevity. Be noted that the steps 810-812 represent the step 908 is performed by the input unit 220 of the portable device 200; the step 904 is performed by the executing unit 230 of the portable device 200; the step 906 is performed by the output unit 240 of the portable device 200; and the step 908 is performed by the display device 110 of the transport 100 or the touch display 510 of the transported.

The abovementioned embodiments are presented merely for describing the features of the present invention, and in no way should be considered to be limitations of the scope of the present invention. In summary, the present invention provides an electronic system applied to a transport and a related control method. When the portable device (e.g., a cell phone or a PDA phone) is coupled to the transport (for example, the portable device is placed in the cradle of the motor vehicle), the portable device switches to the specific operating mode from the normal operating mode. As a result, the consumer is able to make use of the input device (e.g., a touch input device and/or a voice input device) of the transport to control the portable device, or the consumer is able to make use of the portable device to control the input device, and then utilize the designated application (such as, navigation, playback of video files, establishments of call connections, or network access) provided by the portable device 200. After that, the display device of the transport can be used for displaying the corresponding executing result of the designated application. On the other hand, when the portable device has not been coupled to the transport (for example, the portable device is taken out from the cradle of the motor vehicle), the portable device switches back to the normal operating mode from the specific operating mode. As a result, by making use of the designated applications provided by the portable device, the architecture of the control device (such as, an on board unit) disposed in the transport can be simplified or some features can be replaced, such that the whole manufacturing cost can be saved. Additionally, since the display device or the touch display (e.g., 9 inches) disposed in the motor vehicle usually has a larger size than the display unit (e.g., 3 inches) of the cell phone, and operations will become more convenient.

In summary there is disclosed an electronic system including a portable device, a display device, an input device, and a control device , wherein the display device, the input device and the control device are disposed in a transport. The input device is used for receiving an input signal. The control device is used for communicating with the display device, the input device, and the portable device. When the portable device is coupled to the transport, the portable device switches to a specific operating mode from a normal operating mode; and when the portable device switches to the specific operating mode, the electronic system makes use of the input device to control the portable device or the electronic system makes use of the portable device to control the input device. Herein the transport may be a motor vehicle, and the control device may be an on board unit.

All combinations and sub-combinations of the above-described features also belong to the invention.

## Claims

1. An electronic system (10) applied to a transport (100), **characterized by**:
a portable device (200);
a display device (110), disposed in the transport (100), for displaying images;
an input device (120, 130), disposed in the transport (100), for receiving an input signal; and
a control device (150), disposed in the transport (100) and coupled to the display device (110), the input device (120, 130), as well as the portable device (200), wherein the control device (150) is used for communicating with the display device (110), the input device (120, 130), and the portable device (200);
wherein when the portable device (200) is coupled to the transport (100), the portable device (200) switches to a specific operating mode from a normal operating mode; and when the portable device (200) switches to the specific operating mode, the electronic system (10) makes use of the input device (120, 130) of the transport (100) to control the portable device (200) or the electronic system (10) makes use of the portable device (200) to control the input device (120, 130).

2. The electronic system (10) of claim 1, **characterized in that** the transport (100) is a motor vehicle, and the control device (150) is an on board unit.

3. The electronic system (10) of claim 1, further **characterized by**:
a cradle (140), disposed in the transport (100), for fixing the portable device (200) and for charging the portable device (200).

4. The electronic system (10) of claim 3, **characterized in that** the cradle (140) comprises a connector (144), and the connector (144) comprises a plurality of pins; and when the portable device (200) is placed in the cradle (140), the cradle (140) charges the portable device (200) via the plurality of pins and electronically connects the transport (100) with the portable device (200).

5. The electronic system (10) of claim 3, **characterized in that** the cradle (140) comprises a button (142), and the portable device (200) is taken out from the cradle (140) by pressing the button (142) of the cradle (140).

6. The electronic system (10) of claim 1, **characterized in that** when the portable device (200) is taken out from the transport (100), the portable device (200) switches back to the normal operating mode from the specific operating mode.

7. The electronic system (10) of claim 1, further **characterized by**:
a transmission interface (160), wherein the control device (150) communicates with the portable device (200) via the transmission interface (160).

8. The electronic system (10) of claim 1, **characterized in that** the portable device (200) comprises:
an input unit (220), for receiving the input signal from the input device (120, 130);
an executing unit (230), coupled to the input unit (220), for executing a corresponding designated application according to the input signal, and for generating a corresponding executing result of the designated application; and
an output unit (240), coupled to the executing unit (230), for outputting the corresponding executing result of the designated application to the control device (150) of the transport (100);
wherein the control device (150) controls the display device (110) to display the corresponding executing result of the designated application.

9. The electronic system (10) of claim 8, **characterized in that** the designated application comprises navigation, playback of video files, playback of music files, establishments of call connections, network access, or provision of transport operating information.

10. The electronic system (10) of claim 1, **characterized in that** the input device (120, 130) is a touch input device, and the input signal is a touch input signal.

11. The electronic system (10) of claim 1, **characterized in that** the input device (120, 130) is a voice input device, and the input signal is a voice input signal.

12. The electronic system (10) of claim 1, **characterized in that** the portable device (200) is a cell phone, a personal digital assistant (PDA), a PDA phone, a smart phone, or a laptop.

13. A method for controlling an electronic system (10) applied to a transport (100), the electronic system (10) comprising a portable device (200), a display device (110) disposed in the transport (100), an input device (120, 130) disposed in the transport (100), and a control device (150) disposed in the transport (100), the method **characterized by** the steps of:
when the portable device (200) is coupled to the transport (100), controlling the portable device (200) to switch to a specific operating mode from a normal operating mode;
when the portable device (200) switches to the specific operating mode, making use of the input device (120, 130) of the transport (100) to control the portable device (200), or making use of the portable device (200) to control the input device (120, 130); and
making use of the control device (150) to communicate with the display device (110), the input device (120, 130), and the portable device (200).

14. The method of claim 13, further **characterized by**:
when the portable device (200) is taken out from the transport (100), the portable device (200) switching back to the normal operating mode from the specific operating mode.

15. The method of claim 13, further **characterized by**:
receiving the input signal from the input device (120, 130);
executing a corresponding designated application according to the input signal, and generating a corresponding executing result of the designated application;
outputting the corresponding executing result of the designated application to the control device (150) of the transport (100); and
displaying the corresponding executing result of the designated application.

16. The method of claim 15, **characterized in that** the designated application comprises navigation, playback of video files, playback of music files, establishments of call connections, network access, or provision of transport operating information.

17. The method of claim 13, **characterized in that** the input signal comprises a touch input signal or a voice input signal.
